Europäisches Patentamt

European Patent Office

Office européen des brevets

(19)

(11) Numéro de publication: **0 076 351**
**B1**

## FASCICULE DE BREVET EUROPEEN

(12)

(45) Date de publication du fascicule du brevet:
18.04.84

(51) Int. Cl.³: **F 16 D 25/14,** F 16 D 25/08,
F 15 B 7/08

(21) Numéro de dépôt: 81830185.5

(22) Date de dépôt: 07.10.81

(54) Récepteur hydraulique d'embrayage et installation hydraulique de commande d'embrayage incorporant un tel récepteur.

(43) Date de publication de la demande:
13.04.83 Bulletin 83/15

(73) Titulaire: **BENDITALIA S.p.A., Via Cavalli 53/A,
I-26013 Crema (IT)**

(45) Mention de la délivrance du brevet:
18.04.84 Bulletin 84/16

(72) Inventeur: **Cadeddu, Leonardo, Via Piacenza 29,
I-26013 Crema (IT)**

(84) Etats contractants désignés:
**DE FR GB IT SE**

(74) Mandataire: **Poidatz, Emmanuel et al, Service Brevets
Bendix 44 rue François 1er, F-75008 Paris (FR)**

(56) Documents cités:
**DE - A - 2 124 947
DE - B - 1 143 365
FR - A - 1 374 908
FR - A - 1 376 572
FR - E - 86 139
US - A - 3 003 319**

ACTORUM AG

Récepteur hydraulique d'embrayage et installation hydraulique de commande d'embrayage incorporant un tel récepteur

L'invention concerne un récepteur hydraulique d'embrayage et une installation hydraulique de commande d'embrayage incorporant un tel récepteur, notamment pour l'équipement de véhicules automobiles.

De manière typique, une installation hydraulique de commande d'embrayage se compose d'un cylindre émetteur actionné par une pédale et d'un cylindre récepteur, relié au cylindre émetteur, coopérant avec une biellette du dispositif d'embrayage.

Le récepteur lui-même se compose en général d'un boîtier percé d'un alésage dans lequel coulisse un piston qui coopère avec la biellette du dispositif d'embrayage au moyen d'une tige de poussée, le piston définissant avec l'alésage une chambre de travail reliée au cylindre émetteur, et un ressort sollicite le piston vers l'extérieur de la chambre en appui sur la tige de poussée.

Lors de la mise en œuvre de l'émetteur par enfoncement de la pédale, du liquide sous pression est envoyé jusqu'à la chambre de travail du récepteur, dont le piston se déplace vers l'extérieur en provoquant le basculement de la biellette du dispositif d'embrayage et le désengagement de ce dernier.

Lors du relâchement de la pédale, le piston retourne, sous l'influence d'un ressort de rappel du dispositif d'embrayage, jusqu'à une position de repos qui se déplace progressivement vers l'intérieur de la chambre de travail au fur et à mesure de l'usure des éléments de friction de l'embrayage. Un tel récepteur hydraulique est décrit notamment dans DE-A-2 124 947.

Dans le but d'avertir de manière simple le conducteur que cette usure atteint un seuil prédéterminé et qu'il y a lieu de remplacer ces éléments de friction, l'invention propose un récepteur hydraulique d'embrayage comprenant: un boîtier percé d'un alésage, un piston monté coulissant dans ledit alésage et définissant dans ce dernier une chambre de travail à relier à une source de fluide sous pression, ledit piston étant prévu pour actionner, par déplacement vers l'extérieur de ladite chambre, à partir d'une position de repos, un dispositif d'embrayage à friction, ladite position de repos se déplaçant vers l'intérieur de ladite chambre en fonction de l'usure dudit dispositif d'embrayage, caractérisé en ce qu'il comprend une valve de retenue de pression maintenue constamment ouverte tant que le déplacement de ladite position de repos du piston vers l'intérieur de la chambre de travail reste inférieur à une valeur donnée, et commandant l'entrée de ladite chambre de travail lorsque le déplacement de ladite position de repos du piston vers l'intérieur de la chambre de travail est supérieure ou égale à ladite valeur donnée.

L'invention sera maintenant décrite en se référant aux dessins annexés dans lesquels

La Figure 1 est une représentation schématique d'une installation hydraulique de commande d'embrayage selon l'invention, dans laquelle un récepteur d'embrayage a été représenté en coupe longitudinale, et

La Figure 2 est une représentation analogue à celle de la Figure 1 illustrant une variante du récepteur d'embrayage.

Cette installation se compose de deux éléments: un cylindre émetteur 10et un cylindre récepteur 12, reliés par un conduit 14.

Le cylindre émetteur 10 est actionné de manière conventionnelle par une pédale 16 et comporte un réservoir à liquide 18.

Le cylindre récepteur coopère avec une biellette 20 du dispositif d'embrayage, non représenté, articulée autour d'un axe 22.

Le cylindre récepteur comprend un boîtier 24 percé d'un alésage 26 dans lequel coulisse un piston 28 pourvu d'un joint d'étanchéité 30. Le piston 28 et l'alésage 26 définissent une chambre de travail 32 dans laquelle débouche un orifice 34, face au piston 28, en liaison avec le conduit 14.

Entre le piston 28 et la biellette 20 est interposée une tige de poussée 36, et un ressort 38 prend appui sur le boîtier 24 pour repousser le piston 28 vers la biellette 20.

L'installation décrite jusqu'ici fonctionne de la manière suivante:

Lorsqu'on désire débrayer, on enfonce la pédale 16, ce qui provoque le transfert le liquide sous pression de l'émetteur 10 vers le récepteur 12 via le conduit 14. Le liquide sous pression pénètre dans la chambre de travail 32 par l'orifice 34 et agit sur le piston 28 qui se déplace vers l'extérieur en provuquant le basculement de la biellette 20 dans le sens horaire si l'on considère la figure, dont résulte le débrayage du véhicule.

Lors du relâchement de la pédale 16, la pression dans la chambre de travail 32 diminue et le piston 28 est rappelé vers l'intérieur par basculement en sens inverse de la biellette 20 sous l'action d'un ressort de rappel, non représenté, à l'intérieur du dispositif d'embrayage.

Deux points de ce fonctionnement sont à noter: en premier lieu, lors du débrayage, quelle que soit la position de départ du piston 28, ce dernier effectue en toutes circonstances une course constante a proportionnelle à la course de la pédale 16. En second lieu, au fur et à mesure de l'usure des éléments de friction du dispositif d'embrayage, la position de repos de la biellette 20 et donc du piston 28 évolue, le piston 28 se déplaçant progressivement vers l'intérieur de la chambre 32.

De manière à avertir le conducteur lorsque l'usure de ces éléments de friction atteint un niveau prédéterminé et qu'il y a lieu de procéder à leur remplacement, on a prévu selon l'invention un dispositif avertisseur réalisé de la manière suivante:

Un clapet de valve annulaire 40 est fixé à l'extrémité d'une tige 42 montée coulissante au travers d'une rondelle 44 appliquée contre le piston 28 par le ressort 38. Un second ressort 46 prend appui sur la rondelle 44 pour repousser la tige 42 jusqu'à venue en butée d'une tête 48 de cette dernière sur la rondelle.

Cet agencement réalise une liaison télescopique axiale entre le clapet 40 et le piston 28.

Au débouché de l'orifice 34 est prévu un siège de valve 50 contre lequel vient prendre appui le clapet 40 lorsque le piston 28 est déplacé vers l'intérieur de la chambre 32 d'une distance b correspondant au niveau d'usure de l'embrayage pour lequel on désire un avertissement.

Enfin, le clapet 40 comporte une languette centrale 52 qui obture un orifice 54 prévu dans l'axe de la tige 42, cet orifice communiquant avec la chambre 32 par des passages obliques 56. Ainsi, lorsque le clapet 40 est appliqué sur son siège 50, le liquide peut s'écouler librement de la chambre 32 vers l'orifice 34, par soulèvement de la languette 52, tandis que l'écoulement en sens inverse est empêché.

Le dispositif avertisseur fonctionne comme suit:

Lorsque l'usure de l'embrayage dépasse un niveau donné, la position de repos du piston 28 se déplace vers l'intérieur de la chambre 32 d'une distance supérieure à b et le clapet 40 vient s'appliquer sur son siège 50 sous la force du ressort 46.

Dans cette situation, en cas d'actionnement de l'émetteur d'embrayage, l'admission de liquide dans la chambre 32 est empêchée tant que la pression qui agit sur la surface A du clapet 40 reste inférieure à la force du ressort 46. Il faut que la pression à l'orifice d'entrée 34 dépasse la pression normalement repuise pour obtenir le déplacement du piston 28, d'une valeur $\triangle P$ fonction de la surface A du clapet 40 et de la force du ressort 46, pour que le piston 28 se déplace et actionne l'embrayage. Le conducteur ressent donc une résistance à la pédale 16 et ce comportement inhabituel de l'installation de commande de l'embrayage l'avertit de la nécessité de remplacer les éléments de friction de l'embrayage.

Lorsque le conducteur exerce sur la pédale un effort supérieur, le clapet 40 se décolle du siège 50 et le récepteur fonctionne normalement comme indiqué ci-avant.

Lorsque l'usure des éléments de friction devient plus importante, le déplacement de la position de repos du piston 28 devient également plus importante et la force du ressort 46 augmente. Dans ces conditions, la résistance à la pédale 16 sera d'autant plus forte que l'usure sera importante.

En outre, cette résistance se maintiendra sur une course plus importante.

Tant que le remplacement des éléments de friction n'a pas été effectué, la position de repos du piston 28 continue à se déplacer vers l'intérieur de la chambre 32 et le retour vers le cylindre émetteur du fluide emprisonné dans cette chambre après fermeture du clapet 40 s'effectue au travers des passages 56 et de l'orifice 54 par soulèvement de la languette 52.

A cet égard, la languette 52 et l'orifice 54 constituent une valve à sens unique.

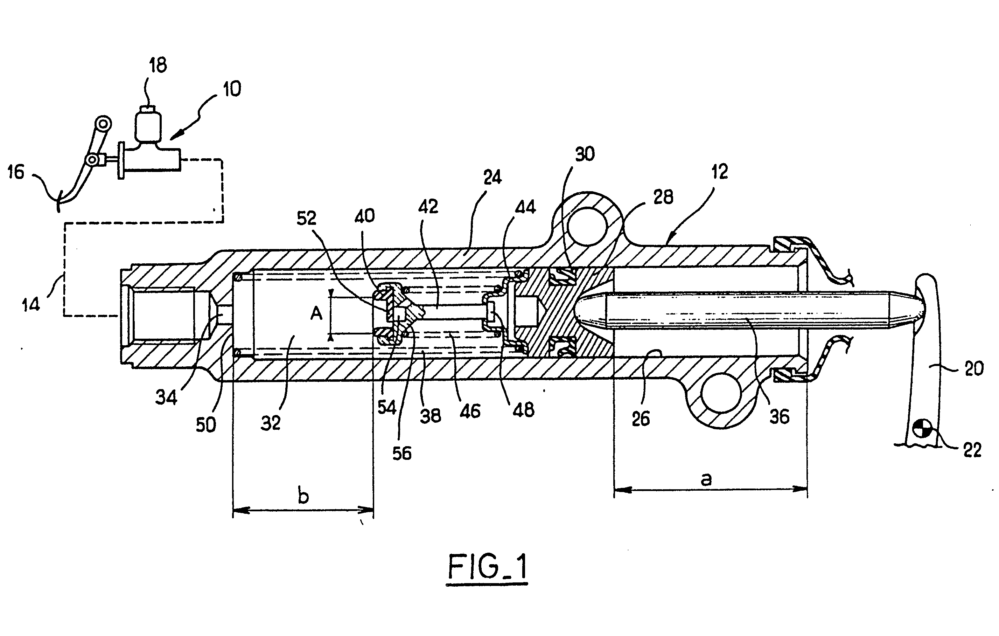

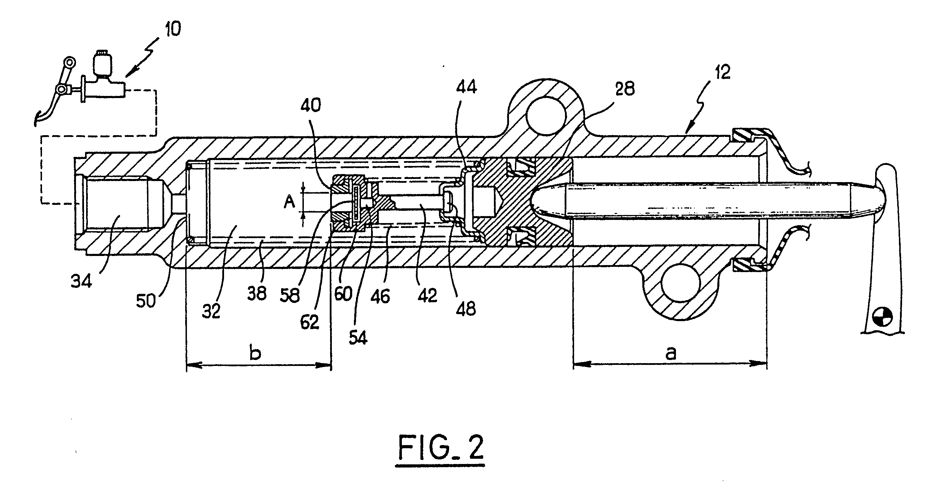

La Figure 2 représente une variante de cette valve à sens unique. Pour des raisons de commodité, les éléments identiques à ceux de la Figure 1 porteront les mêmes références.

L'élément de fermeture 58 de la valve à sens unique est constitué par un disque monté libre dans un évidement circulaire 60 de la tige 42, en arrière du clapet 40.

Pour permettre le passage libre du fluide en retour, le clapet 40 comporte des bossages postérieurs 62.

De la sorte, on pourra rendre aussi faible que possible la section A du clapet annulaire 40 et réduire en conséquence la force du ressort 46 tout en conservant le même durcissement à la pédale.

**Revendications**

1. Récepteur hydraulique d'embrayage (12) comprenant: un boîtier (24) percé d'un alésage (26), un piston (28) monté coulissant dans ledit alésage et définissant dans ce dernier une chambre de travail (32) à relier à une source de fluide sous pression (10), ledit piston étant prévu pour actionner, par déplacement vers l'extérieur de ladite chambre, à partir d'une position de repos, un dispositif d'embrayage à friction, ladite position de repos se déplaçant vers l'intérieur de ladite chambre en fonction de l'usure dudit dispositif d'embrayage, caractérisé en ce qu'il comprend une valve de retenue de pression (40, 50) maintenue constamment ouverte tant que le déplacement de ladite position de repos du piston vers l'intérieur de la chambre de travail reste inférieur à une valeur donnée (b), et commandant l'entrée de ladite chambre de travail (32) lorsque le déplacement de ladite position de repos du piston (28) vers l'intérieur de la chambre de travail (32) est supérieure ou égale à ladite valeur donnée (b).

2. Récepteur hydraulique d'embrayage selon la revendication 1, caractérisé en ce que ladite valve (40, 50) comprend un clapet (40) monté sur ledit piston (28) par l'intermédiaire d'une liaison télescopique (42, 44, 46, 48) et un siège de valve (50) défini sur ledit boîtier (24) à l'entrée (34) de ladite chambre de travail.

3. Récepteur hydraulique d'embrayage selon la revendication 2, caractérisé en ce que ledit clapet (40) est porté par une tige (42) coaxiale au piston (28), ladite tige étant sollicitée par les moyens élastiques (46) en direction dudit siège (50).

4. Récepteur hydraulique d'embrayage selon la revendication 3, caractérisé en ce que ladite tige (42) est montée coulissante au travers d'une rondelle (44) en appui contre ledit piston et comporte une tête (48) maintenue en butée contre ladite rondelle (44) par lesdits moyens élastiques (46).

5. Récepteur hydraulique d'embrayage selon l'une quelconque des revendications 2 à 4, caractérisé en ce qu'il comprend, en position fermée de la valve de retenue de pression (40, 50), une valve à sens unique (52, 58, 54) entre ladite chambre (32) et ladite entrée (34).

6. Récepteur hydraulique d'embrayage selon la revendication 5, caractérisé en ce que ledit clapet (40) de la valve de retenue de pression (40, 50) est annulaire et que ladite valve à sens unique (52, 54) est constituée par une languette centrale (52) venue de matière avec ledit clapet (40) et par un orifice axial (54) de ladite tige.

7. Récepteur hydraulique d'embrayage selon la revendication 5, caractérisé en ce que ledit clapet (40) de la valve de retenue de pression (40, 50) est annulaire et que ladite valve à sens unique (58, 54) est constituée par un disque (58) reçu dans un évidement circulaire (60) de ladite tige (42), en arrière dudit clapet (40), ce dernier comportant des bossages postérieurs (62), et par un orifice axial (54) de ladite tige.

8. Installation hydraulique de commande d'embrayage comprenant un cylindre émetteur (10) actionné par un organe d'actionnement manuel (16), caractérisée en ce qu'elle comprend un récepteur hydraulique selon l'une quelconque des revendications 1 à 7.

**Patentansprüche**

1. Hydraulischer Kupplungsnehmerzylinder (12) mit einem mit einer Bohrung (28) versehenen Gehäuse (24), mit einem Kolben (28), der in der Bohrung (26) verschiebbar ist, in der letzteren eine Arbeitskammer (32) begrenzt, die mit einer Druckmittelquelle (10) verbindbar ist, und beim Herausbewegen aus einer Ruhestellung heraus zur Aussenseite der Kammer hin eine Reibkupplung betätigt, wobei sich die Ruhestellung des Kolbens in Abhängigkeit vom Verschleiss der Reibkupplung zum Inneren der Arbeitskammer hin verlagert, dadurch gekennzeichnet, dass er ein Druckrückhalteventil (40, 50) aufweist, welches solange ständig offen ist, wie die Verlagerung der Ruhestellung des Kolbens zum Inneren der Arbeitskammer hin kleiner als ein vorgegebener Wert (b) bleibt, und welches den Einlass der Arbeitskammer (32) steuert, wenn die Verlagerung der Ruhestellung des Kolbens (28) zum Inneren der Arbeitskammer (32) hin grösser oder gleich dem vorgegebenen Wert (b) ist.

2. Kupplungsnehmerzylinder nach Anspruch 1, dadurch gekennzeichnet, dass das Druckrückhalteventil (40, 50) ein Ventilverschlussteil (40) aufweist, welches auf dem Kolben (28) über eine Teleskopverbindung (42, 44, 46, 48) angebracht ist, und einen Ventilsitz (50) aufweist, der auf dem Gehäuse (24) am Eingang (34) der Arbeitskammer ausgebildet ist.

3. Kupplungsnehmerzylinder nach Anspruch 2, dadurch gekennzeichnet, dass das Ventilverschlussteil (40) durch eine zum Kolben (28) koaxiale Stange (42) getragen ist, wobei letztere durch elastische Mittel (46) in Richtung des Ventilsitzes (50) vorgespannt ist.

4. Kupplungsnehmerzylinder nach Anspruch 3, dadurch gekennzeichnet, dass die Stange (42) durch eine Scheibe (44) hindurch verschiebbar am Kolben (28) abgestützt ist und einen Kopf (48) aufweist, der durch die elastischen Mittel (46) in Anschlag an der Scheibe (44) gehalten ist.

5. Kupplungsnehmerzylinder nach einem der Ansprüche 2 bis 4, dadurch gekennzeichnet, dass er im Schliesszustand des Druckrückhalteventiles (40, 50) ein zwischen der Arbeitskammer (32) und deren Einlass (34) liegendes Rückschlagventil (52, 58, 54) aufweist.

6. Kupplungsnehmerzylinder nach Anspruch 5, dadurch gekennzeichnet, dass das Ventilverschlussteil (40) des Druckrückhalteventiles (40, 50) ringförmig ausgebildet ist und dass das Rückschlagventil (52, 54) durch eine zentrale Zunge (52), die an das Ventilverschlussteil (40) angeformt ist, und eine axiale Öffnung (54) der Stange gebildet ist.

7. Kupplungsnehmerzylinder nach Anspruch 5, dadurch gekennzeichnet, dass das Ventilverschlussteil (40) des Rückhalteventiles (40, 50) ringförmig ist und dass das Rückschlagventil (58, 54) durch eine Scheibe (58) und eine axiale Öffnung (54) der Stange gebildet ist, wobei die Scheibe (58) in einer kreisförmigen Ausnehmung (60) der Stange (42) Aufnahme findet, die hinter dem Ventilverschlussteil (40) liegt, wobei letzteres mit hinten liegenden Erhebungen (62) versehen ist.

8. Hydraulische Betätigungseinrichtung für eine Kupplung mit einem Geberzylinder (10), der durch ein durch Muskelkraft betätigbares Stellglied (16) bewegt wird, dadurch gekennzeichnet, dass sie einen hydraulischen Kupplungsnehmerzylinder nach einem der Ansprüche 1 bis 7 aufweist.

**Claims**

1. A hydraulic clutch slave cylinder (12), comprising a housing (24) having a bore (26) formed therein, a piston (28) arranged in the bore for sliding movement and defining a work chamber (32) therein, which in turn is connectable to a pressure fluid source (10), the piston actuating a friction clutch device when moved out of the rest position towards the exterior of the housing, said rest position migrating towards the interior of the work chamber in accordance with wear of the clutch device, characterized in that it comprises a pressure retaining valve (40, 50) which is permanently maintained in the open state as long as the extent of migration of the piston's rest position towards the interior of the work chamber (32) is smaller than a predetermined value (b) and which controls the inlet to the work chamber (32) when the extent of migration of the piston's rest position towards the interior of the work chamber (32) is greater or equal to said predetermined value (b).

2. A hydraulic clutch slave cylinder as in claim 1, characterized in that the pressure retaining valve (40, 50) comprises a closure member (40) mounted on the piston (28) by means of a telescopic connection (42, 44, 46, 48) as well as a valve seat (50) formed on the housing (24) at the inlet (34) to the work chamber.

3. A hydraulic clutch slave cylinder as in claim 2, characterized in that the valve closure member (40) is carried by a rod (42) coaxial to the piston (28), said rod being biassed towards said valve seat (50) by elastic means (46).

4. A hydraulic clutch slave cylinder as in claim 3, characterized in that said rod (42) slidably extends through a washer (44) being supported from said piston and includes a head (48) being kept in abutment against said washer (44) by said elastic means (46).

5. A hydraulic clutch slave cylinder as in any of the claims 2 to 4, characterized in that it comprises in the closed state of the pressure retaining valve (40, 50) a unidirectional valve (52, 54, 58) located between said work chamber (32) and said inlet (34).

6. A hydraulic clutch slave cylinder as in claim 5, characterized in that the closure member (40) of the pressure retaining valve (40, 50) is of annular shape and that said unidirectional valve (52, 54) is formed by a central tab (52) tab formed integral with the valve closure member (40) as well as by an axial orifice (54) of said rod.

7. A hydraulic clutch slave cylinder as in claim 5, characterized in that the closure member (40) of the pressure retaining valve (40, 50) is of annular shape and that the unidirectional valve (58, 54) is formed by a disc (58) as well as an axial orifice (54) of said rod, the disc (58) being received in a circular recess (60) of said rod (42) located behind the closure member (40), the latter comprising rear projections (62).

8. A hydraulic clutch control system comprising a master cylinder (10) controlled by manual actuating means (16), characterized in that it comprises a hydraulic slave cylinder in accordance with any of the claims 1 to 7.

**FIG_1**

FIG. 2